# EUROPÄISCHE PATENTSCHRIFT

(11) **EP 2 726 436 B1**
(45) Veröffentlichungstag und Bekanntmachung des Hinweises auf die Patenterteilung: **11.04.2018**
(21) Anmeldenummer: 12733651.9
(22) Anmeldetag: 29.06.2012
(51) Int. Cl.: C04B 28/14, C04B 28/16, C04B 28/02, C04B 20/10

(54) **GIPS-HALTIGE BAUSTOFFMASSEN**
GYPSUM-CONTAINING CONSTRUCTION MATERIAL COMPOUNDS
MATÉRIAUX DE CONSTRUCTION CONTENANT DU PLÂTRE

(30) Priorität: 01.07.2011 DE 102011078531
(43) Veröffentlichungstag der Anmeldung: 07.05.2014
(73) Patentinhaber: Wacker Chemie AG, 81737 München (DE)
(72) Erfinder: HAGEN, Wolfgang, 40668 Meerbusch (DE); FRITZE, Peter, 84533 Haiming (DE)
(74) Vertreter: Ege, Markus
(86) Internationale Anmeldenummer: PCT/EP2012/062717
(87) Internationale Veröffentlichungsnummer: WO 2013/004621

(56) Entgegenhaltungen:
- WO-A1-01/19751
- WO-A1-98/52882
- CN-A- 101 844 907
- DE-A1- 10 219 975
- DE-A1- 19 853 196
- JP-A- 2002 104 866
- KR-A- 20080 009 673
- KR-B1- 100 875 899
- US-A- 4 494 990

## Beschreibung

Die vorliegende Erfindung betrifft Gips-haltige Baustoffmassen und deren Verwendung beispielsweise als Fliesenkleber oder Selbstverlaufsmassen.

Gips ist ein in großen Mengen preiswert zur Verfügung stehendes mineralisches Bindemittel für Baustoffmassen, das insbesondere im Vergleich zu Zement mit viel geringerem Energieaufwand zugänglich ist. Denn neben natürlich vorkommenden Gipsen werden erhebliche Mengen an Gips aus Rauchgasentschwefelungsanlagen gewonnen, an dessen Verwendung weltweit Interesse besteht. Deswegen gibt es ein großes Bestreben, den energieintensiven Werkstoff Zement durch den weniger energieintensiven Gips zu ersetzen und somit im Baubereich den insgesamten Energieverbrauch zu verringern und dadurch einen Beitrag zum ökologischeren Bauen zu leisten. Nachteiligerweise ist Gips wasserempfindlich, so dass Bauwerke auf Basis Gips-haltiger Baustoffmassen unter feuchten oder nassen Bedingungen an Festigkeit verlieren. Dieser Mangel tritt in besonderem Maße bei Frost/Tau-Beanspruchung zu Tage. Deswegen ist der Anwendungsbereich von Gips im Baubereich bisher erheblich limitiert und im Wesentlichen auf den Innenbereich fokussiert.

Um Gips zum Einsatz im Außen- oder gar Nassbereich geeignet zu machen, bedarf es also zusätzlicher Maßnahmen. Hierfür wurde der Zusatz von Hydrophobierungsmitteln zu Gips-haltigen Baustoffmassen vorgeschlagen. So schlägt beispielsweise die DE-A 3704439 den Einsatz von Siliconen und Siloxanen, Stearaten und Paraffinwachsen vor. Die US 2002/0040666 lehrt, Organopolysiloxane auf anorganische oder organische Träger aufzubringen und in dieser Form in Gips-haltige Baustoffmassen einzubringen. Die US 5437722 beschreibt Wasser-beständige Gipsprodukte, die als Zusätze Paraffin, Montanwachs und Polyvinylalkohol enthalten. Die EP-A 320982 offenbart die Verwendung von Redispersionspulvern auf Basis von Vinylacetat/Versaticsäure-Vinylester-Copolymeren zur Hydrophobierung von Gipswerkstoffen. Die EP-A 1133455 empfiehlt für diesen Zweck Vinylaromat-1,3-Dien-Mischpolymerisate. Die WO 98/52882 offenbart Gips-haltige Baustoffmassen enthaltend Calciumsulfat-beta-Hydrat (Gips), Zement sowie entweder Silica-Staub oder Reisschalenasche.

KR 100 875 899 B1 offenbart eine Zusammensetzung zur Herstellung von Böden, wobei die Zusammensetzung inter alia mehrere Zemente, Gips, Zuschlag, eine pozzolanische Komponente wie Metakaolin und ein redispergierbares Polymerpulver umfasst. Das Polymerpulver kann dabei auf Basis von Polyvinylacetat, Vinylester- und/oder Vinylhalogen-einheiten ausgewählt werden. Zur Verbesserung der Haftung von Gipszusammensetzungen auf Kunststoff- oder Metalloberflächen lehrt die DE-A 10064083 den Zusatz von (Erd)Alkali-Salzen von kurzkettigen Fettsäuren, die mit Carboxylgruppen substituiert sind. Die GB 1497125 befasst sich schließlich mit der Verbesserung mechanischer Eigenschaften von Gipsmörteln für Fliesenkleber.
Nachteilig bei den bisher genannten Hydrophobierungsmitteln ist deren teilweise nicht vernachlässigbare Hydrophilie, wodurch die Wasserbeständigkeit entsprechender Bauprodukte eingeschränkt wird. Des Weiteren können Bauprodukte von hydrophobierten Gips-haltigen Baustoffmassen hinsichtlich ihrer mechanischen Festigkeit in vielen Fällen nicht befriedigen, insbesondere nach Lagerung unter feuchten oder nassen Bedingungen oder nach Frost/Tau-Beanspruchung.
Vor diesem Hintergrund bestand die Aufgabe, Gips-haltige Baustoffmassen bereitzustellen, mit denen Bauprodukte mit hoher Beständigkeit gegenüber Wasser oder Frost/Tau-Lagerung sowie hoher mechanischer Festigkeit zugänglich sind.

Gegenstand der Erfindung sind Gips-haltige Baustoffmassen gemäß Anspruch 1 enthaltend Gips, ein oder mehrere Polymere, gegebenenfalls ein oder mehrere Zuschläge und gegebenenfalls ein oder mehrere Zusatzstoffe, dadurch gekennzeichnet, dass die Gips-haltigen Baustoffmassen ein oder mehrere Zemente und Metakaolin enthalten und ein oder mehrere Polymere ausgewählt werden aus der Gruppe umfassend Vinylester-Homopolymerisate, Vinylester-Mischpolymerisate enthaltend eine oder mehrere Vinylester-Einheiten und eine oder mehrere Monomereinheiten aus der Gruppe umfassend Olefine, Vinylaromaten, Vinylhalogenide, Acrylsäureester, Methacrylsäureester, Fumar- und/oder Maleinsäuremono- oder -diester oder siliciumfunktionelle Comonomere, Homopolymerisate von Vinylhalogenverbindungen und Mischpolymerisate enthaltend Vinylhalogen-Einheiten und eine oder mehrere Monomereinheiten aus der Gruppe umfassend Vinylester, Olefine, Methacrylsäureester und Acrylsäureester.

Geeigneter Gips ist beispielsweise α- oder β-Halbhydrat (CaSO₄·1/2 H₂O), Dihydrat, Anhydrit oder das bei der Rauchgasentschwefelung anfallende Calciumsulfat (REA-Gips). Der Gips kann beispielsweise in Form von Baugips, Stuckgips, Hartformgips oder Modellgips vorliegen. Es können aber auch andere Gipsarten eingesetzt werden, wie Estrichgips oder Marmorgips.

Beispiele für geeignete Zemente sind Portlandzement (CEM I), Portlandhüttenzement (CEM II), Hochofenzement (CEM III), Puzzolanzement (CEM IV), Kompositzement (CEM V), Aluminatzement, insbesondere Calcium-Sulfo-Aluminatzement, Portlandsilicatstaubzement, Portlandschieferzement, Portlandkalksteinzement, Trasszement, Magnesiazement, Phosphatzement, Mischzemente oder Füllzemente. Bevorzugte Zemente sind Portlandzement (CEM I), Portlandhüttenzement (CEM II) oder Hochofenzement (CEM III).

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymersiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats, Geeignet sind auch epoxidfunktionelle Comonomere wie Glycidylmethacrylat und Glycidylacrylat. Weitere Beispiele sind siliciumfunktionelle Comonomere, wie Acry-loxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylcrylat oder -methacrylat sowie Verbindungen wie Diacetonacrylamid und Acetylacetoxyethylacrylat oder -methacrylat.

Es werden ein oder mehrere Polymerisate ausgewählt aus der Gruppe umfassend Vinylester-Homopolymerisate, Vinylester-Mischpolymerisate enthaltend eine oder mehrere Vinylester-Einheiten und ein oder mehrere Monomereinheiten aus der Gruppe umfassend Olefine, Vinylaromaten, Vinylhalogenide, Acrylsäureester, Methacrylsäureester, Fumar- und/oder Maleinsäuremono- oder -diester oder siliciumfunktionelle Comonomere; Homo- oder Mischpolymerisate von Vinylhalogenverbindungen wie Vinylchlorid enthaltend eine oder mehrere Monomereinheiten aus der Gruppe umfassend Vinylester, Olefine und Methacrylsäureester, Acrylsäureester, wobei die Polymerisate noch Hilfsmonomere in den oben genannten Mengen enthalten können.

Besonders bevorzugt werden Mischpolymerisate von einem oder mehreren Vinylestern, insbesondere Vinylacetat, mit 1 bis 50 Gew.-% Ethylen; Mischpolymerisate von Vinylacetat mit 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, Veo-Va11 und gegebenenfalls 1 bis 50 Gew.-% Ethylen; Mischpolymerisate von ein oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit ein oder mehreren Vinylestern, 1 bis 50 Gew.-% Ethylen und 1 bis 60 Gew.-% Vinylchlorid; wobei die Polymerisate noch die genannten Hilfsmonomere in den oben genannten Mengen enthalten können, und sich die Angaben in Gew.-% auf jeweils 100 Gew.-% aufaddieren.

Beispiele für besonders bevorzugte Comonomere für Vinylchlorid-Mischpolymerisate sind α-Olefine, wie Ethylen oder Propylen, und/oder Vinylester, wie Vinylacetat, Vinyllaurat oder Vinylester einer alpha-verzweigten Carbonsäure mit 9 bis 11 C-Atomen, und/oder Acrylsäureester bzw. Methacrylsäureester von Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder Fumar- und/oder Maleinsäuremono- oder -diester wie die Dimethyl-, Methyl-t-butyl-, Di-n-butyl-, Di-t-Butyl- und Diethylester der Maleinsäure bzw. Fumarsäure.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Am meisten bevorzugte Mischpolymerisate sind auch Vinylchlorid-Ethylen-Mischpolymerisate enthaltend 60 bis 98 Gew.-% Vinylchlorideinheiten und 1 bis 40 Gew.-% Ethyleneinheiten, wobei sich die Angaben in Gew.-% auf das Gesamtgewicht des Copolymerisats beziehen und sich jeweils auf 100 Gew.-% addieren. Solche Vinylchlorid-Ethylen-Copolymerisate sind aus EP 0 149 098 A2 bekannt.

Die Monomerauswahl bzw. die Auswahl der Gewichtsanteile der Comonomere erfolgt dabei so, das eine Glasübergangstemperatur Tg von -50°C bis +50°C, vorzugsweise -40°C bis +40°C, besonders bevorzugt -20°C bis +30°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymere erfolgt im Allgemeinen in wässrigem Medium und bevorzugt nach dem Emulsions- oder Suspensionspolymerisationsverfahren - wie beispielsweise in DE-A 102008043988 beschrieben. Die Polymere fallen dabei in Form von wässrigen Dispersionen an. Bei der Polymerisation können die gängigen Schutzkolloide und/oder Emulgatoren eingesetzt werden, wie in der DE-A 102008043988 beschrieben. Die Schutzkolloide können anionisch oder vorzugweise kationisch oder nichtionisch sein. Bevorzugt sind auch Kombinationen von kationischen und nichtionischen Schutzkolloiden. Bevorzugte nichtionische Schutzkolloide sind Polyvinylalkohole. Bevorzugte kationische Schutzkolloide sind Polymere, die ein oder mehrere kationische Ladungen tragen, wie beispielsweise in E. W. Flick, Water Soluble Resins - an Industrial Guide, Noyes Publications, Park Ridge, N.J., 1991, beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymere in Form von wässrigen Dispersionen können, wie beispielsweise in der DE-A 102008043988 beschrieben, in entsprechende in Wasser redispergierbare Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Die Gips-haltigen Baustoffmassen können weiter die üblichen Zuschläge und Zusatzstoffe enthalten. Übliche Zuschläge umfassen Kalkhydrat zu vorzugsweise 1 bis 10 Gew.-%, bezogen auf das Trockengewicht der Gips-haltigen Baustoffmassen, und/oder inerte Füllstoffe. Beispiele für inerte Füllstoffe sind Quarzsand, Quarzmehl, Kalksteinmehl, Calciumcarbonat, Dolomit, Ton, Kreide, Weißkalkhydrat, Talkum oder Glimmer, Gummigranulat oder Hartfüllstoffe, wie Aluminiumsilicate, Korund, Basalt, Carbide, wie Siliciumcarbid oder Titancarbid. Als inerte Füllstoffe sind Quarzsand, Quarzmehl, Kalksteinmehl, Calciumcarbonat, Calciummagnesiumcarbonat (Dolomit), Kreide oder Weißkalkhydrat bevorzugt; Quarzsand, Quarzmehl oder Kalksteinmehl sind besonders bevorzugt. Die Zuschläge können auch Kies umfassen. Kies hat im Allgemeinen Durchmesser von ≥ 2 mm.

Die Zuschläge haben mittlere Teilchendurchmesser von vorzugsweise 50 µm bis 2,0 mm, besonders bevorzugt 50 µm bis 1,5 mm und am meisten bevorzugt 50 bis 800 µm (bestimmbar mittels Laserbeugungsanalyse oder Siebanalyse).

Mit Zusatzstoffen können die Verarbeitbarkeit der Gips-haltigen Baustoffmassen bzw. die Eigenschaften damit gefertigter Bauprodukte verbessert werden. Übliche Zusatzstoffe sind Verdickungsmittel, beispielsweise Polysaccharide wie Celluloseether und modifizierte Celluloseether, Stärkeether, Guar Gum, Xanthan Gum, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Aminosäuren und modifizierte Aminosäuren, besonders N-Polyoxymethylen-Aminosäure, Saccharide, Oxalsäure, Bernsteinsäure, Weinsäure, Gluconsäure, Zitronensäure, Sucrose, Glucose, Fructose, Sorbit, Pentaerythrit oder Phosphate. Weitere Zusatzstoffe sind Abbindebeschleuniger, beispielsweise Alkali- oder Erdalkalisalze von anorganischen oder organischen Säuren. Weitere Beispiele für Zusatzstoffe sind Salze langkettiger Fettsäuren wie Ca-Stearat, Na-Oleat, Siliconbauten-Schutzmittel. Darüber hinaus sind noch zu nennen: Konservierungsmittel, Filmbildehilfsmittel, Dispergiermittel, Schaumstabilisatoren, Entschäumer, Verflüssiger, Fließmittel und Flammschutzmittel (z.B. Aluminiumhydroxid).

In bevorzugten Ausführungsformen der erfindungsgemäßen Gips-haltigen Baustoffmassen umfassen die Zusatzstoffe ein oder mehrere hydrophobierende Additive. Hydrophobierende Additive enthalten vorzugsweise ein oder mehrere Organosiliciumverbindungen.

Geeignete Organosiliciumverbindungen umfassen beispielsweise Silane wie Tetraorganosilane SiR₄ und Organoorganoxysilane SiRₙ(OR')₄₋ₙ mit n = 1 bis 3, Polymethylhydrogensiloxane, Siloxanharze, Polysilane vorzugsweise der allgemeinen Formel R₃Si(SiR₂)ₙSiR₃ mit n = 0 bis 500, Organosilanole wie SiRₙ(OH)₄₋ₙ, Disiloxane, Oligosiloxane, Polysiloxane beispielsweise aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und wobei die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Chlor, mit Ether-, Thioether-, Ester-, Amid-, Nitril-, Hydroxyl-, Amin-, Carboxyl-, Sulfonsäure-, Carbonsäureanhydrid und Carbonyl-Gruppen substituiert sein können, und wobei im Fall der Polysilane R auch die Bedeutung OR' haben kann.

Weitere Beispiele für die Organosiliciumverbindungen sind Organosiliconate, insbesondere Alkylsiliconate, wie monomere oder oligomere Alkylsilantriole. Organosiliconate sind beispielsweise erhältlich durch Umsetzung von einem oder mehreren Organoalkoxysilanen mit einer oder mehreren Polyhydroxyverbindungen oder vorzugsweise mit einer oder mehreren Alkalilaugen. Für die Herstellung von Organosiliconaten bevorzugte Organoalkoxysilane sind Methyltrimethoxysilan, Methyltriethoxysilan, Ethyltrialkoxysilan, Propyltrimethoxysilane, Butyltrimethoxysilane, Pentyltrialkoxysilane, Hexyltrimethoxysilane, Heptyltrimethoxysilane, Octyltrimethoxysilane. Beispiele für Alkalilaugen sind Natriumhydroxid oder Kaliumhydroxid, insbesondere in Form von deren wässrigen Lösungen. Beispiele für geeignete Polyhydroxyverbindungen sind Alkandiole, wie Ethylenglykol, Diethylenglykol, Triethylenglykol, Polyethylenglykol, 1,2-Propandiol oder 1,3-Propandiol, Alkantriole, wie Glycerin, Alkantetrole, wie Pentaerythrit, Hydroxycarbonsäuren, wie Milchsäure, Zitronensäure oder Weinsäure, Saccharide, wie Zucker, insbesondere Glucose, Saccharose oder Fructose, oder Stärke. Die Umsetzungsprodukte können basische oder saure Bestandteile enthalten, beispielsweise Katalysatoren, welche zur Förderung der Alkoxygruppenabspaltung zugesetzt werden können. Verfahren zur Herstellung von Organosiliconaten sind beispielsweise in WO 2012/022544, DE-A 102011076344.9 oder DE OS 10107614 beschrieben.

Besonders bevorzugte Organosiliziumverbindungen sind Methyltrimethoxysilan, Methyltriethoxysilan, Ethyltrimethoxysilan, Ethyltriethoxysilan, Propyltrimethoxysilane, Propyltriethoxysilane, n-Butyltrimethoxysilan, Isobutyltrimethoxysilan, Pentyltrimethoxysilane, Hexyltrimethoxysilane, Cyclohexyltrimethoxysilan, Methyltripropoxysilan, Methyltri(ethoxy-ethoxy)silan, Vinyltri(methoxyethoxy)silan, (Meth)acryloxypropyltrimethoxysilan, (Meth)acryloxypropyl-triethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Heptyltrimethoxysilane, Heptyltriethoxysilane, Isooctyltriethoxysilan, n-Octyltriethoxysilan, Hexadecyltriethoxysilane, Dipropyldiethoxysilane, Methylphenyldiethoxysilan, Diphenyldimethoxysilan, Methylvinyltri-(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxan und Methylhydrogensiloxan-Einheiten, Dimethylpolysiloxane, sowie Dimethylpolysiloxane mit Si-OH-Gruppen in den endständigen Einheiten. Besonders bevorzugte Organosiliziumverbindungen sind auch die oben genannten Organosiliconate.

Bevorzugte hydrophobierende Additive enthalten ein oder mehrere Organosiliciumverbindungen, die auf ein oder mehrere Träger aufgebracht sind. Geeignete Träger basieren beispielsweise auf anorganischen Partikeln, wasserlöslichen organischen Polymeren oder wasserunlöslichen organischen Polymeren. Beispiele für anorganische Partikel sind Aluminosilicate, wie Zeolith oder Metakaolin, Flugasche, Lehm, Kalk, Carbonate. Beispiele für wasserlösliche organische Polymere sind Stärke, Cellulosen oder Polyvinylalkohole. Bei den wasserunlöslichen organischen Polymeren handelt es sich vorzugsweise um die weiter oben beschriebenen Polymere basierend auf einem oder mehreren ethylenisch ungesättigten Monomeren. Die wasserunlöslichen organischen Polymeren liegen besonders bevorzugt in Form der weiter oben beschriebenen in Wasser redispergierbaren Pulver vor.

Die hydrophobierenden Additive enthaltend gegebenenfalls Träger liegen vorzugsweise in fester, insbesondere in partikulärer Form vor. Vorzugsweise werden die Organosiliciumverbindungen und Träger gemischt, bevor die hydrophobierenden Additive in die Gips-haltigen Baustoffmassen eingebracht werden. Dabei werden die Organosiliciumverbindungen vorzugsweise auf die Träger aufgebracht bzw. adsorbiert. Entsprechende Verfahren zur Herstellung geträgerter Organosiliciumverbindungen sind beispielsweise in der WO 2008/062018, WO 2010/012654 oder WO 2010/052201 beschrieben. Besonders bevorzugt sind aber hydrophobierende Additive, die keine Träger enthalten.

Bevorzugt ist es auch, eine Kombination aus mindestens zwei hydrophobierenden Additiven einzusetzen. Bevorzugte Kombinationen umfassen ein Organosiliconat basierend auf mindestens einem Methyltrialkoxysilan und ein Organosiliconat basierend mindestens auf einem Silan aus der Gruppe umfassend Ethyltrialkoxysilan, Propyltrialkoxysilane, Butyltrialkoxysilane, Pentyltrialkoxysilane, Hexyltrialkoxysilane, Heptyltrialkoxysilane, Octyltrialkoxysilane.
Eine weitere bevorzugte Kombination umfasst ein Organosiliconat basierend auf mindestens einem Methyltrialkoxysilan sowie ein oder mehrere Organoorganoxysilane, insbesondere Ethyltrialkoxysilan, Propyltrialkoxysilane, Butyltrialkoxysilane, Pentyltrialkoxysilane, Hexyltrialkoxysilane, Heptyltrialkoxysilane, oder Octyltrialkoxysilane.
Typische Rezepturen der Gips-haltigen Baustoffmassen enthalten im Allgemeinen 5 bis 90 Gew.-%, insbesondere 5 bis 80 Gew.-% Gips, 0,5 bis 20 Gew.-%, insbesondere 1 bis 10 Gew.-% Metakaolin, 0,5 bis 30 Gew.-%, insbesondere 1 bis 10 Gew.-% Zement, 0,5 bis 50 Gew.-%, insbesondere 1 bis 10 Gew.-% Polymer, 0 bis 80 Gew.-%, vorzugsweise 1 bis 80 Gew.-% und besonders bevorzugt 20 bis 70 Gew.-% Zuschläge und 0 bis 10 Gew.-%, insbesondere 0,1 bis 4 Gew.-% Zusatzstoffe. Die hydrophobierenden Additive sind vorzugsweise zu 0 bis 5 Gew.-%, insbesondere zu 0,1 bis 1 Gew.-% in den Gips-haltigen Baustoffmassen enthalten. Die vorgenannten Angaben in Gew.-% beziehen auf das Trockengewicht der Gips-haltigen Baustoffmassen und addieren sich insgesamt auf 100 Gew.-%.
Das Gewichtsverhältnis von Zement zu Metakaolin beträgt erfindungsgemäß 1 zu 2 bis 2 zu 1. Die Gesamtmenge an Gips und Zuschlägen beträgt vorzugsweise 50 bis 98 Gew.-%, besonders bevorzugt 60 bis 95 Gew.-% und am meisten bevorzugt 70 bis 90 Gew.-%, jeweils bezogen auf das Trockengewicht der Gips-haltigen Baustoffmassen.
In bevorzugten Ausführungsformen werden die Gips-haltigen Baustoffmassen als Baukleber, insbesondere als Fliesenkleber, oder als Beschichtungsmittel, insbesondere als Selbstverlaufs- oder Bodenspachtelmasse, eingesetzt.

Bei Verwendung als Baukleber enthalten die Gips-haltigen Baustoffmassen im Allgemeinen 25 bis 50 Gew.-% Gips, 35 bis 60 Gew.-% Zuschläge, wobei sich die Angaben in Gew.-% auf das Trockengewicht der Gips-haltigen Baustoffmassen beziehen und sich insgesamt auf 100 Gew.-% addieren. Bei Verwendung als Baukleber können die weiteren Komponenten entsprechend der vorgenannten typischen Rezeptur der Gips-haltigen Baustoffmassen eingesetzt werden.

Bei Verwendung als Beschichtungsmittel enthalten die Gips-haltigen Baustoffmassen im Allgemeinen 30 bis 75 Gew.-%, insbesondere 40 bis 60 Gew.-% Gips, 10 bis 60 Gew.-%, insbesondere 25 bis 45 Gew.-% Zuschläge, wobei sich die Angaben in Gew.-% auf das Trockengewicht der Gips-haltigen Baustoffmassen beziehen und sich insgesamt auf 100 Gew.-% addieren. Bei Verwendung als Beschichtungsmittel können die weiteren Komponenten entsprechend der vorgenannten typischen Rezeptur der Gips-haltigen Baustoffmassen eingesetzt werden.

Vor ihrer Applikation werden den Gips-haltigen Baustoffmassen Wasser zugesetzt, vorzugsweise 15 bis 70 Gew.-%. Im Falle der Baukleber werden vorzugsweise 20 bis 35 Gew.-% und besonders bevorzugt 15 bis 30 Gew.-% Wasser zugesetzt. Den Beschichtungsmitteln werden vorzugsweise 15 bis 30 Gew.-% und besonders bevorzugt 19 bis 25 Gew.-% Wasser zugesetzt. Die vorgenannten Angaben betreffend die Gew.-% von Wasser beziehen sich jeweils auf das Trockengewicht der jeweiligen Gips-haltigen Baustoffmasse. Die genannten Wassermengen sind förderlich, um Baustoffmassen mit den gewünschten Verarbeitungseigenschaften zu erhalten.

Zur Herstellung der Gips-haltigen Baustoffmassen werden Gips, Zement, Metakaolin, gegebenenfalls Zuschläge, gegebenenfalls Zusatzstoffe und Polymere, insbesondere in Form von wässrigen Polymerdispersionen oder vorzugsweise in Form von in Wasser redispergierbaren Polymerpulvern, in geeigneten Mischern gemischt und homogenisiert. In einer alternativen Vorgehensweise werden die Polymere in Form von wässrigen Dispersionen oder wässrigen Redispersionen von in Wasser redispergierbaren Polymerpulvern mit einer Mischung der weiteren, trockenen Komponenten der Gips-haltigen Baustoffmassen gemischt (2-Komponenten-Baustoffmasse). Vorzugsweise wird aber eine Trockenmischung hergestellt und das zur Verarbeitung erforderliche Wasser unmittelbar vor der Verarbeitung hinzugefügt.

Die erfindungsgemäßen Gips-haltigen Baustoffmassen eignen sich vor allem für die Verwendung als Gipsmörtel, beispielsweise als Beschichtungsmittel, Baukleber oder sonstige gängige Anwendungen. Beispiele für Baukleber sind Klebemörtel, Ansetzmörtel oder Fliesenkleber für Fliesen aller Art, wie Steingut-, Steinzeug-, Feinststeinzeug-, Keramik- oder Naturfliesen, im Innen- oder Außenbereich. Beispiele für Beschichtungsmittel sind Spachtelmassen, beispielsweise für Wände oder Böden im Innen- oder Außenbereich, CaSO₄-Fließestriche Putze im Innen-oder Außenbereich.

Aus den erfindungsgemäßen Gips-haltigen Baustoffmassen hergestellte Bauprodukte sind überraschenderweise auch unter feuchten oder nassen Bedingungen, insbesondere sogar bei Frost/Tauwechseln beständig und zeigen nach derartigen Beanspruchungen wesentlich bessere Festigkeitswerte oder mechanische Eigenschaften als Bauprodukte aus herkömmlichen Gips-haltigen Massen. So können mit den erfindungsgemäßen Baustoffmassen die Haftzugfestigkeit, Biegezugfestigkeit, Druckfestigkeit, Abriebsbeständigkeit, Wasseraufnahme und damit die Bewitterungsbeständigkeit von Gips-basierenden Bauprodukten entscheidend verbessert werden. Die erfindungsgemäßen Bauprodukte erreichen selbst nach Wasserlagerung sogar die Festigkeitswerte von zementären Systemen. Somit sind die erfindungsgemäßen Baustoffmassen in anwendungstechnischer Hinsicht ein gleichwertiger Ersatz für zementäre Baustoffmassen, jedoch mit dem Vorteil, dass Gips im Gegensatz zu Zement mit viel geringerem Energieaufwand zugänglich ist.

Insgesamt zeichnen sich die erfindungsgemäßen Gips-haltigen Baustoffmassen also durch eine hervorragende Wasserbeständigkeit aus. Diese Effekte werden überraschenderweise durch die synergistischen Wechselwirkungen zwischen Gips, Zement und Metakaolin bewirkt. Durch Zusatz von Polymeren und/oder hydrophobierenden Additiven, insbesondere Organosiliciumverbindungen, wird dieser Effekt noch weiter in synergistischer Weise gesteigert.

Die nachfolgenden Beispiele dienen zur weiteren Erläuterung der Erfindung:

### Herstellung der Gips-haltigen Baustoffmassen:

Aus den Komponenten der jeweiligen Rezeptur der (Vergleichs)Beispiele 1 bis 6 wurde zuerst eine Trockenmischung hergestellt, indem sämtliche Komponenten der jeweiligen Rezeptur, außer das Anmischwasser, homogen gemischt wurden. Anschließend wurde die jeweilige Menge an Anmischwasser zugegeben und die so erhaltene Mischung homogen vermischt.

### Beispiel 1:

**Rezeptur des Fliesenklebers:**

| | |
|---|---|
| Hartformgips HF1 (alpha-Halbhydrat) | 400 Gew.-Teile |
| Portlandzement CEM I 42,5 | 50 Gew.-Teile |
| Quarzsand BCS 413 | 451 Gew.-Teile |
| Metakaolin Metastar 501 | 50 Gew.-Teile |
| Celluloseether Culminal C 9133 | 5 Gew.-Teile |
| Verzögerer Retardan P | 2 Gew.-Teile |
| Beschleuniger Kaliumsulfat | 2 Gew.-Teile |
| Dispersionspulver VINNAPAS 4023 N | 40 Gew.-Teile |

(Polyvinylalkohol-stabilisiertes, in Wasser redispergierbares Dispersionspulver auf Basis eines Copolymers von Vinylacetat und Ethylen).
Anmischwasser: 280 ml Wasser auf 1000 g Trockenmischung.

### Beispiel 2:

**Rezeptur der Bodenspachtelmasse:**

| | |
|---|---|
| Hartformgips HF1 (alpha-Halbhydrat) | 500,0 Gew.-Teile |
| Beschleuniger Leichtspat | 5,0 Gew.-Teile |
| Portlandzement weiß CEM I 42,5 R | 75,0 Gew.-Teile |
| Quarzsand BCS 413 | 209,3 Gew.-Teile |
| Calciumcarbonat Omyacarb 6 AL | 103,0 Gew.-Teile |
| Metakaolin Metastar 501 | 75,0 Gew.-Teile |
| Entschäumer Agitan P 800 | 2,0 Gew.-Teile |
| Verzögerer Retardan P | 0,4 Gew.-Teile |
| Verflüssiger Melment F 17 G | 5,0 Gew.-Teile |
| Celluloseether Tylose H 300 P 2 | 0,3 Gew.-Teile |
| Dispersionspulver VINNAPAS 5025 L | 25,0 Gew.-Teile |

(Polyvinylalkohol-stabilisiertes, in Wasser redispergierbares Dispersionspulver auf Basis eines Copolymers von Vinylacetat und Ethylen).
Anmischwasser: 280 ml Wasser auf 1000 g Trockenmischung.

### Vergleichsbeispiel 3:

**Rezeptur des Fliesenklebers:**

| | |
|---|---|
| Hartformgips HF1 (alpha-Halbhydrat) | 400 Gew.-Teile |
| Quarzsand BCS 413 | 551 Gew.-Teile |
| Celluloseether Culminal C 9133 | 5 Gew.-Teile |
| Verzögerer Retardan P | 2 Gew.-Teile |
| Beschleuniger Kaliumsulfat | 2 Gew.-Teile |
| Dispersionspulver VINNAPAS 4023 N | 40 Gew.-Teile. |

Anmischwasser: 240 ml Wasser auf 1000 g Trockenmischung.

### Vergleichsbeispiel 4:

**Rezeptur des Fliesenklebers:**

| | |
|---|---|
| Hartformgips HF1 (alpha-Halbhydrat) | 400 Gew.-Teile |
| Portlandzement CEM I 42,5 | 50 Gew.-Teile |
| Quarzsand BCS 413 | 501 Gew.-Teile |
| Celluloseether Culminal C 9133 | 5 Gew.-Teile |
| Verzögerer Retardan P | 2 Gew.-Teile |
| Beschleuniger Kaliumsulfat | 2 Gew.-Teile |
| Dispersionspulver VINNAPAS 4023 N | 40 Gew.-Teile. |

Anmischwasser: 250 ml Wasser auf 1000 g Trockenmischung.

### Vergleichsbeispiel 5:

**Rezeptur des Fliesenklebers:**

| | |
|---|---|
| Hartformgips HF1 (alpha-Halbhydrat) | 400 Gew.-Teile |
| Metakaolin Metastar 501 | 50 Gew.-Teile |
| Quarzsand BCS 413 | 501 Gew.-Teile |
| Celluloseether Culminal C 9133 | 5 Gew.-Teile |
| Verzögerer Retardan P | 2 Gew.-Teile |
| Beschleuniger Kaliumsulfat | 2 Gew.-Teile |
| Dispersionspulver VINNAPAS 4023 N | 40 Gew.-Teile. |

Anmischwasser: 270 ml Wasser auf 1000 g Trockenmischung.

### Vergleichsbeispiel 6:

**Rezeptur der Bodenspachtelmasse:**

| | |
|---|---|
| Hartformgips HF1 (alpha-Halbhydrat) | 500,0 Gew.-Teile |
| Beschleuniger Leichtspat | 5,0 Gew.-Teile |
| Portlandzement weiß CEM I 42,5 R | 10,0 Gew.-Teile |
| Quarzsand BCS 413 | 349,3 Gew.-Teile |
| Calciumcarbonat Omyacarb 6 AL | 103,0 Gew.-Teile |
| Entschäumer Agitan P 800 | 2,0 Gew.-Teile |
| Verzögerer Retardan P | 0,4 Gew.-Teile |
| Verflüssiger Melment F 17 G | 5,0 Gew.-Teile |
| Celluloseether Tylose H 300 P 2 | 0,3 Gew.-Teile |
| Dispersionspulver VINNAPAS 5025 L | 25,0 Gew.-Teile. |

Anmischwasser: 240 ml Wasser auf 1000 g Trockenmischung.

### Ausprüfung der Gips-haltigen Baustoffmassen:

Die Gips-haltigen Fliesenkleber der (Vergleichs)Beispiele 1, 3, 4 und 5 wurden jeweils gemäß der europäischen Fliesenklebernorm EN 1348 ausgeprüft. Die Haftzugfestigkeit wurde hierbei im Anschluss an folgende Lagerbedingungen bestimmt:

| | |
|---|---|
| NK: | 28 Tage (d) Normklimalagerung (NK); |
| Nass: | 7 d NK- und 21 d Nasslagerung; |
| Wärme: | 14 d NK- und 14 d Wärmelagerung bei 70°C; |
| Frost/Tau: | 7 d NK-, 21 d Nass- und 7d Frost/Tau Wechsella-gerung |

Die Ergebnisse der Austestung der (Vergleichs)Beispiele 1, 3, 4 und 5 sind in Tabelle 1 zusammengefasst.

**Tabelle 1: Austestungsergebnisse der Fliesenkleber der (Vergleichs)Beispiele 1, 3, 4 und 5:**

| (Vergleichs)-Beispiel | NK [N/mm²] | Nass [N/mm²] | Wärme [N/mm²] | Frost/Tau [N/m²] |
|---|---|---|---|---|
| 1 | 1,2 | 0,78 | 1,28 | 0,8 |
| 3 | 1,2 | 0,1 | 1,2 | 0,2 |
| 4 | 1,4 | 0,4 | 1,2 | 0,4 |
| 5 | 1,3 | 0,2 | 1,2 | 0,1 |

Die Gips-haltigen Bodenspachtelmassen der (Vergleichs)Beispiele 2 und 6 wurden jeweils gemäß der französischen CSTB-Vorschrift für Bodenausgleichsmassen für die Beanspruchungklasse P4 ausgeprüft. Hierbei wurden folgende Parameter im Anschluss an folgende Lagerbedingungen bestimmt:

| | |
|---|---|
| BZ-NK: | Biegezugfestigkeit nach 28 d NK-Lagerung; |
| BZ-Nass: | Biegezugfestigkeit nach Nasslagerung; |
| DF-NK: | Druckfestigkeit nach 28 d NK-Lagerung; |
| DF-Nass: | Druckfestigkeit nach Nasslagerung; |
| HZF-NK: | Haftzugfestigkeit nach 28 d NK-Lagerung; |
| HZF-Nass: | Haftzugfestigkeit nach Nasslagerung. |

Die Ergebnisse der Austestung der (Vergleichs)Beispiele 2 bzw. 4 sind in Tabelle 2 zusammengefasst.

**Tabelle 2: Austestungsergebnisse der Bodenspachtelmassen der (Vergleichs)Beispiele 2 und 6:**

| (Vergleichs)-Beispiel | DF-NK [N/mm²] | DF-Nass [N/mm²] | BZ-NK [N/mm²] | BZ-Nass [N/mm²] | HZF-NK [N/mm²] | HZF-Nass [N/mm²] |
|---|---|---|---|---|---|---|
| 2 | 48,3 | 26,4 | 13,8 | 5,7 | 2,5 | 2,2 |
| 6 | 27,1 | 11,6 | 8,2 | 2,3 | 2,6 | 0,7 |

Die Ergebnisse mit den Fliesenklebern in Tabelle 1 demonstrieren, dass mit dem erfindungsgemäßen Fliesenkleber (Beispiel 1) nach Nass- wie auch nach Frost/Taulagerung eine vielfach höhere Haftzugfestigkeit erzielt wird als mit den Fliesenklebern der Vergleichsbeispiele 3, 4, und 5. Die Haftzugfestigkeiten nach NK- und Wärme-Lagerung sind bei allen Fliesenkleberformulierungen der (Vergleichs)Beispiele 1 bzw. 3, 4, und 5 auf vergleichbarem Niveau.

Die Ergebnisse in Tabelle 2 belegen, dass die erfindungsgemäße Bodenspachtelmasse (Beispiel 2) sowohl nach NK- als auch nach Nasslagerung Biegezug- und Druckfestigkeiten ergibt, die signifikant über denen des Vergleichsbeispiels 6 liegen. Die Haftzugfestigkeit nach Nasslagerung ist mit Beispiel 2 ebenfalls deutlich höher als mit Vergleichsbeispiel 6.

Die Ergebnisse zeigen also, dass mit den erfindungsgemäßen Gips-haltigen Baustoffmassen Bauprodukte zugänglich werden, die unter feuchten oder nassen Bedingungen bessere Festigkeitswerte oder mechanische Eigenschaften besitzen als herkömmliche Gips-haltige Bauprodukte.

### Herstellung von hydrophobierten, Gips-haltigen Baustoffmassen:

### Beispiel 7:

Wie Beispiel 1 mit dem einzigen Unterschied, dass der Trockenmischung zusätzlich 3 Gew.-Teile pulverförmiges Kaliummethylsiliconat (Siliconat des Herstellbeispiels 2 der WO 2012/022544: Molverhältnis von Kalium zu Silicium = 0,64) beigemischt wurde.

### Beispiel 8:

Wie Beispiel 1 mit dem einzigen Unterschied, dass der Trockenmischung zusätzlich 3 Gew.-Teile pulverförmiges Kalium-isobutylsiliconat (Siliconat V1a der DE-A 102011076344.9: Molverhältnis von Kalium zu Silicium = 1,00) beigemischt wurde.

### Beispiel 9:

Wie Beispiel 1 mit dem einzigen Unterschied, dass der Trockenmischung zusätzlich 5 Gew.-Teile Silanpulver (Silanpulver des Beispiels 3b der EP 1394198: ein Alkyltrialkoxysilan geträgert auf Polyvinylalkohol) beigemischt wurde.

### Beispiel 10:

Wie Beispiel 7 mit dem einzigen Unterschied, dass der Trockenmischung zusätzlich 3 Gew.-Teile des pulverförmigen Kaliumiso-butylsiliconats aus Beispiel 8 beigemischt wurden.

### Beispiel 11:

Wie Beispiel 7 mit dem einzigen Unterschied, dass der Trockenmischung zusätzlich 5 Gew.-Teile des Silanpulvers aus Beispiel 9 beigemischt wurden.

### Ausprüfung der hydrophobierten, Gips-haltigen Baustoffmassen:

Die hydrophobierten, Gips-haltigen Fliesenkleber der Beispiele 7 bis 11 bzw. der Gips-haltige Fliesenkleber des Beispiels 1 wurden jeweils in Anlehnung an die europäische Norm EN 520 bezüglich ihrer Wasseraufnahme ausgeprüft.
Nach 28-tägiger Normklimalagerung und anschließender Trocknung bis zur Gewichtskonstanz erfolgte eine zweistündige Wasserlagerung, wie in der EN 520 beschrieben. Die Ergebnisse der Austestung sind in Tabelle 3 zusammengefasst.

Die Ergebnisse in Tabelle 3 belegen, dass der Zusatz von erfindungsgemäßen Organosiliciumverbindungen zu den Gips-haltigen Fliesenklebern zu einer sehr effizienten Hydrophobierung der Fliesenkleber führt. Die Wasseraufnahme sinkt signifikant um bis zu 90%. Besonders vorteilhaft erwies sich der kombinierte Einsatz zweier Additive (Beispiele 10 und 11).

**Tabelle 3: Austestungsergebnisse der hydrophobierten Fliesenkleber:**

| Beispiel | Wasseraufnahme gemäß EN 520 (Gew.-%)^{a)} | Reduktion der Wasseraufnahme in (%) |
|---|---|---|
| 1 | 7,83 | 0 |
| 7 | 2,85 | 63,6 |
| 8 | 6,27 | 19,9 |
| 9 | 4,59 | 41,4 |
| 10 | 0,79 | 90,0 |
| 11 | 0,93 | 88,2 |

| | | |
|---|---|---|
| a) Zunahme der Masse des jeweiligen Probekörpers nach Wasserlagerung, bezogen auf die Masse vor der Wasserlagerung. | | |

## Patentansprüche

1. Gips-haltige Baustoffmassen enthaltend Gips, ein oder mehrere Polymere, gegebenenfalls ein oder mehrere Zuschläge und gegebenenfalls ein oder mehrere Zusatzstoffe, **dadurch gekennzeichnet, dass**
die Gips-haltigen Baustoffmassen ein oder mehrere Zemente und Metakaolin enthalten und das Gewichtsverhältnis von Zement zu Metakaolin 1 zu 2 bis 2 zu 1 beträgt und
ein oder mehrere Polymere ausgewählt werden aus der Gruppe umfassend Vinylester-Homopolymerisate, Vinylester-Mischpolymerisate enthaltend eine oder mehrere Vinylester--Einheiten und eine oder mehrere Monomereinheiten aus der Gruppe umfassend Olefine, Vinylaromaten, Vinylhalogenide, Acrylsäureester, Methacrylsäureester, Fumar- und/oder Maleinsäuremono- oder -diester oder siliciumfunktionelle Comonomere,
Homopolymerisate von Vinylhalogenverbindungen und Mischpolymerisate enthaltend Vinylhalogen-Einheiten und eine oder mehrere Monomereinheiten aus der Gruppe umfassend Vinylester, Olefine, Methacrylsäureester und Acrylsäureester.

2. Gips-haltige Baustoffmassen nach Anspruch 1, **dadurch gekennzeichnet, dass** der Gips ausgewählt wird aus der Gruppe umfassend α- oder β-Halbhydrat (CaSO₄·1/2 H₂O), Dihydrat, Anhydrit oder das bei der Rauchgasentschwefelung anfallende Calciumsulfat (REA-Gips).

3. Gips-haltige Baustoffmassen nach Anspruch 1 oder 2, **dadurch gekennzeichnet, dass**
ein oder mehrere Polymere ausgewählt werden aus der Gruppe umfassend Mischpolymerisate mit Vinylacetat und 5 bis 50 Gew.-% Ethylen; Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; Mischpolymerisate mit Vinylacetat, 5 bis 50 Gew.-% Ethylen und 1 bis 60 Gew.-% Vinylchlorid; Vinylchlorid-Ethylen-Mischpolymerisate enthaltend 60 bis 98 Gew.-% Vinylchlorideinheiten und 1 bis 40 Gew.-% Ethyleneinheiten,
wobei sich die Angaben in Gew.-% auf das Gesamtgewicht des Copolymerisats beziehen und sich jeweils auf 100 Gew.-% addieren.

4. Gips-haltige Baustoffmassen nach Anspruch 1 bis 3, **dadurch gekennzeichnet, dass** die Zuschläge ausgewählt werden aus der Gruppe umfassend Kalkhydrat und inerte Füllstoffe, wie Quarzsand, Quarzmehl, Kalksteinmehl, Calciumcarbonat, Dolomit, Ton, Kreide, Weißkalkhydrat, Talkum, Glimmer, Gummigranulat, Aluminiumsilicate, Korund, Basalt oder Carbide.

5. Gips-haltige Baustoffmassen nach Anspruch 1 bis 4, **dadurch gekennzeichnet, dass** 5 bis 90 Gew.-% Gips, 0,5 bis 20 Gew.-% Metakaolin, 0,5 bis 30 Gew.-% Zement, 0,5 bis 50 Gew.-% Polymer, 0 bis 80 Gew.-% Zuschläge und 0 bis 5 Gew.-% Zusatzstoffe enthalten sind, wobei sich die Angaben in Gew.-% auf das Trockengewicht der Gips-haltigen Baustoffmassen beziehen und sich insgesamt auf 100 Gew.-% addieren.

6. Gips-haltige Baustoffmassen nach Anspruch 1 bis 5, **dadurch gekennzeichnet, dass** die Gesamtmenge an Gips und Zuschlägen 50 bis 98 Gew.-% beträgt, bezogen auf das Trockengewicht der Gips-haltigen Baustoffmassen.

7. Gips-haltige Baustoffmassen nach Anspruch 1 bis 6, **dadurch gekennzeichnet, dass** ein oder mehrere Zusatzstoffe ausgewählt werden aus der Gruppe der Organosiliciumverbindungen umfassend Silane, Polymethylhydrogensiloxane, Siloxanharze, Polysilane, Organosilanole, Disiloxane, Oligosiloxane, Polysiloxane und Organosiliconate, wobei die Organosiliciumverbindungen gegebenenfalls auf einem Träger fixiert oder in einem Verkapselungsmaterial verkapselt vorliegen können.

8. Verwendung der Gips-haltigen Baustoffmassen aus Anspruch 1 bis 7 als Gipsmörtel, insbesondere als Beschichtungsmittel oder Baukleber.

9. Verwendung der Gips-haltigen Baustoffmassen gemäß Anspruch 8 als Klebemörtel, Ansetzmörtel, Fliesenkleber, Spachtelmassen, Selbstverlaufsmassen oder Put-.

## Claims

1. Gypsum-containing construction material compounds, comprising gypsum, one or more polymers, optionally one or more aggregates, and optionally one or more admixtures, **characterized in that** the gypsum-containing construction material compounds comprise one or more cements and metakaolin and the weight ratio of cement to metakaolin is 1:2 to 2:1 and one or more polymers are selected from the group encompassing vinyl ester homopolymers, vinyl ester copolymers comprising one or more vinyl ester units and one or more monomer units from the group encompassing olefins, vinylaromatics, vinyl halides, acrylic esters, methacrylic esters, monoesters or diesters of fumaric and/or maleic acid, or silicon-functional comonomers, homopolymers of vinyl halogen compounds and copolymers comprising vinyl halogen units and one or more monomer units from the group encompassing vinyl esters, olefins, methacrylic esters and acrylic esters.

2. Gypsum-containing construction material compounds according to Claim 1, **characterized in that** the gypsum is selected from the group encompassing α- or β-hemihydrate (CaSO₄·1/2 H₂O), dihydrate, anhydrite, or the calcium sulfate obtained during flue gas desulfurization (FGD gypsum).

3. Gypsum-containing construction material compounds according to Claim 1 or 2, **characterized in that** one or more polymers are selected from the group encompassing copolymers with vinyl acetate and 5 to 50 wt% of ethylene; copolymers with vinyl acetate, 1 to 50 wt% of ethylene, and 1 to 50 wt% of a vinyl ester of α-branched monocarboxylic acids having 9 to 11 C atoms; copolymers with 30 to 75 wt% of vinyl acetate, 1 to 30 wt% of vinyl laurate or vinyl esters of an alpha-branched carboxylic acid having 9 to 11 C atoms, and also 1 to 30 wt% of (meth)acrylic esters of unbranched or branched alcohols having 1 to 15 C atoms, which also contain 1 to 40 wt% of ethylene; copolymers with vinyl acetate, 5 to 50 wt% of ethylene, and 1 to 60 wt% of vinyl chloride;
vinyl chloride-ethylene copolymers containing 60 to 98 wt% of vinyl chloride units and 1 to 40 wt% of ethylene units,
the figures in wt% being based on the total weight of the copolymer and adding up in each case to 100 wt%.

4. Gypsum-containing construction material compounds according to Claim 1 to 3, **characterized in that** the aggregates are selected from the group encompassing lime hydrate and inert fillers, such as silica sand, finely ground quartz, finely ground limestone, calcium carbonate, dolomite, clay, chalk, white lime hydrate, talc, mica, rubber granules, aluminium silicates, corundum, basalt, or carbides.

5. Gypsum-containing construction material compounds according to Claim 1 to 4, **characterized in that** 5 to 90 wt% of gypsum, 0.5 to 20 wt% of metakaolin, 0.5 to 30 wt% of cement, 0.5 to 50 wt% of polymer, 0 to 80 wt% of aggregates, and 0 to 5 wt% of admixtures are present, the figures in wt% being based on the dry weight of the gypsum-containing construction material compounds and adding up in total to 100 wt%.

6. Gypsum-containing construction material compounds according to Claim 1 to 5, **characterized in that** the total amount of gypsum and aggregates is 50 to 98 wt%, based on the dry weight of the gypsum-containing construction material compounds.

7. Gypsum-containing construction material compounds according to Claim 1 to 6, **characterized in that** one or more admixtures are selected from the group of organosilicon compounds encompassing silanes, polymethylhydrogensiloxanes, siloxane resins, polysilanes, organosilanols, disiloxanes, oligosiloxanes, polysiloxanes, and organosiliconates, it being possible for the organosilicon compounds to be present optionally immobilized on a support or encapsulated in an encapsulating material.

8. Use of the gypsum-containing construction material compounds from Claim 1 to 7 as gypsum mortar, more particularly as coating material or construction adhesive.

9. Use of the gypsum-containing construction material compounds according to Claim 8 as adhesive mortar, bedding mortar, tile adhesive, filling compounds, self-leveling compounds or plaster.

## Revendications

1. Matériaux de construction contenant du plâtre, contenant du plâtre, un ou plusieurs polymères, éventuellement un ou plusieurs suppléments et éventuellement un ou plusieurs additifs, **caractérisés en ce que** les matériaux de construction contenant du plâtre contiennent un ou plusieurs ciments et du métakaolin, et le rapport en poids entre le ciment et le métakaolin est de 1 sur 2 à 2 sur 1, et
un ou plusieurs polymères sont choisis dans le groupe comprenant les homopolymères d'esters de vinyle, les copolymères d'esters de vinyle contenant une ou plusieurs unités ester de vinyle et une ou plusieurs unités monomères du groupe comprenant les oléfines, les composés aromatiques de vinyle, les halogénures de vinyle, les esters de l'acide acrylique, les esters de l'acide méthacrylique, les mono- ou diesters de l'acide fumarique et/ou maléique ou les comonomères à fonction silicium, les homopolymères de composés de vinylhalogène et les copolymères contenant des unités vinylhalogène et une ou plusieurs unités monomères du groupe comprenant les esters de vinyle, les oléfines, les esters de l'acide méthacrylique et les esters de l'acide acrylique.

2. Matériaux de construction contenant du plâtre selon la revendication 1, **caractérisés en ce que** le plâtre est choisi dans le groupe comprenant le semi-hydrate α ou β (CaSO₄·1/2 H₂O), le dihydrate, l'anhydrite ou le sulfate de calcium formé lors de la désulfuration de gaz de fumée (plâtre REA).

3. Matériaux de construction contenant du plâtre selon la revendication 1 ou 2, **caractérisés en ce qu'**un ou plusieurs polymères sont choisis dans le groupe comprenant les copolymères contenant de l'acétate de vinyle et 5 à 50 % en poids d'éthylène ; les copolymères contenant de l'acétate de vinyle, 1 à 50 % en poids d'éthylène et 1 à 50 % en poids d'un ester de vinyle d'acides monocarboxyliques α-ramifiés de 9 à 11 atomes C ; les copolymères contenant 30 à 75 % en poids d'acétate de vinyle, 1 à 30 % en poids de laurate de vinyle ou d'esters de vinyle d'un acide carboxylique alpha-ramifié de 9 à 11 atomes C, ainsi que 1 à 30 % en poids d'esters de l'acide (méth)acrylique d'alcools non ramifiés ou ramifiés de 1 à 15 atomes C, qui contiennent également 1 à 40 % en poids d'éthylène ; les copolymères contenant de l'acétate de vinyle, 5 à 50 % en poids d'éthylène et 1 à 60 % en poids de chlorure de vinyle ; les copolymères de chlorure de vinyle-éthylène contenant 60 à 98 % en poids d'unités chlorure de vinyle et 1 à 40 % en poids d'unités éthylène, les données en % en poids se rapportant au poids total du copolymère et leur somme étant à chaque fois de 100 % en poids.

4. Matériaux de construction contenant du plâtre selon les revendications 1 à 3, **caractérisés en ce que** les suppléments sont choisis dans le groupe comprenant la chaux hydratée et les charges inertes, telles que le sable de quartz, la farine de quartz, le calcaire en poudre, le carbonate de calcium, la dolomite, l'argile, la craie, la chaux blanche hydratée, le talc, le mica, le caoutchouc granulé, les silicates d'aluminium, le corindon, le basalte ou les carbures.

5. Matériaux de construction contenant du plâtre selon les revendications 1 à 4, **caractérisés en ce que** 5 à 90 % en poids de plâtre, 0,5 à 20 % en poids de métakaolin, 0,5 à 30 % en poids de ciment, 0,5 à 50 % en poids de polymère, 0 à 80 % en poids de suppléments et 0 à 5 % en poids d'additifs sont contenus, les données en % en poids se rapportant au poids sec des matériaux de construction contenant du plâtre et leur somme totale étant de 100 en poids.

6. Matériaux de construction contenant du plâtre selon les revendications 1 à 5, **caractérisés en ce que** la quantité totale de plâtre et de suppléments est de 50 à 98 % en poids, par rapport au poids sec des matériaux de construction contenant du plâtre.

7. Matériaux de construction contenant du plâtre selon les revendications 1 à 6, **caractérisés en ce qu'**un ou plusieurs additifs sont choisis dans le groupe des composés d'organosilicium comprenant les silanes, les polyméthylhydrogénosiloxanes, les résines de siloxanes, les polysilanes, les organosilanols, les disiloxanes, les oligosiloxanes, les polysiloxanes et les organosiliconates, les composés d'organosilicium pouvant éventuellement être fixés sur un support ou encapsulés dans un matériau d'encapsulation.

8. Utilisation des matériaux de construction contenant du plâtre selon les revendications 1 à 7 en tant que mortiers de plâtre, notamment en tant qu'agents de revêtement ou colles de construction.

9. Utilisation des matériaux de construction contenant du plâtre selon la revendication 8 en tant que mortiers adhésifs, mortiers de pose, colles à carreaux, mastics, matériaux autonivelants ou enduits.
